(19) **Europäisches Patentamt**
**European Patent Office**
**Office européen des brevets**

(11) **EP 1 068 675 B1**

(12) **EUROPEAN PATENT SPECIFICATION**

(45) Date of publication and mention
of the grant of the patent:
**11.07.2012 Bulletin 2012/28**

(51) Int Cl.:
*H04B 3/03* (2006.01)

(21) Application number: **99918398.1**

(86) International application number:
**PCT/SE1999/000437**

(22) Date of filing: **19.03.1999**

(87) International publication number:
**WO 1999/050970 (07.10.1999 Gazette 1999/40)**

(54) **A method and an arrangement in an analog line interface circuit**

Verfahren und Anordnung in einer Analogen Leitungsschnittstellenschaltung

Procédé et montage dans un circuit d'interface de ligne analogique

(84) Designated Contracting States:
**DE ES FI FR GB IT NL SE**

(30) Priority: **31.03.1998 SE 9801133**

(43) Date of publication of application:
**17.01.2001 Bulletin 2001/03**

(73) Proprietor: **Lantiq Deutschland GmbH**
**85579 Neubiberg (DE)**

(72) Inventors:
• **BARKARÖ, Stefan**
**S-171 49 Solna (SE)**

• **RANDAHL, Torbjörn**
**S-131 42 Nacka (SE)**

(74) Representative: **Banzer, Hans-Jörg**
**Kraus & Weisert**
**Patent- und Rechtsanwälte**
**Thomas-Wimmer-Ring 15**
**80539 München (DE)**

(56) References cited:
**WO-A1-88/10539    US-A- 5 402 485**
**US-A- 5 510 751**

**Description**

**TECHNICAL FIELD**

The invention relates generally to analog line interface circuits in broadband applications, and more specifically to a terminating impedance setting method and arrangement in such a circuit.

**BACKGROUND OF THE INVENTION**

When broadband data information is transmitted and received over a two-wire twisted copper line, it is important that the line is correctly terminated to avoid reflection losses. Ideally, the line should be terminated and driven via an impedance which is equal to the characteristic impedance of the line within the frequency band in question.

Different methods can be used in order to obtain a correct terminating impedance. The most simple and, at the same time, the most common method is to insert impedance networks, e.g. discrete resistors, in series with the outputs of line drivers, i.e. current amplifiers driving the line. If the characteristic impedance of the line is non-resistive, RLC networks can be used.

This method provides good impedance matching to the line, but is not flexible, since the only way to alter the impedance is to change the components in the impedance networks. Another big drawback is the power loss in the impedance networks.

Another method for terminating a line is known from US 5,510,751, where a transconductance amplifier is used for setting the terminating impedance to the line. By this method, there will not be any power loss in any extra impedance network as in said first mentioned method.

However, a disadvantage with this second method is that the matching of the drive impedance with the characteristic impedance of the line will be very poor, since it is not possible to implement a non-resistive terminating impedance.

Another disadvantage is, if this solution is implemented on silicon, that the resistive terminating impedance will be dependent on temperature and spread in the manufacturing process parameters. In the worst case, the resistive termination impedance could vary as much as $\pm 50\%$, which is unacceptable for many applications, for example xDSL, i.e. various Digital Subscriber Line technologies, such as Asymmetric Digital Subscriber Line (ADSL) technologies. In order to compensate for these variations, the transmitted power to the line must be increased.

Thus, both of the above methods result in high power losses. The second method also gives a poor control of the terminating impedance to the line.

From US 4,402,485, a method for setting the terminating impedance towards a two-wire twisted copper line is known, which comprises sensing the line voltage, amplifying the sensed differential line voltage into a single ended voltage, converting the amplified voltage into a current through an impedance network connected to a current buffer, buffering and amplifying the output current from the current buffer, and injecting the amplified current onto the line. This known method generally corresponds to the preamble of independent claim 1.

In xDSL applications, a high power loss in the line driver/receiver reduces the possibilities to pack more lines on one and the same line card, which makes the solution more expensive.

Also, in xDSL applications, it is important to be able to control the terminating impedance to the line well (return loss must be higher than 10dB) as well as to be able to change the terminating impedance to the line in a flexible manner without changing external circuitry, since different subscribers could be connected via different types of cables having different characteristic impedances.

Moreover, in the particular xDSL applications, the load conditions can change on the line during operation, since the line is shared with normal telephony.

**SUMMARY OF THE INVENTION**

The object of the invention is to eliminate the problems with the known solutions as indicated above.

This is attained by a method according to claim 1 and by an arrangement according to claim 4. The dependent claims define preferred and advantageous embodiments of the invention.

By adjusting the voltage amplification factor and/or the current amplification factor and/or the impedance of the external impedance network, a desired terminating impedance can be set.

In accordance with the invention, no extra impedance network has to be inserted in series with the outputs of the current amplifiers to achieve a correct terminating impedance. Thus, the output voltage can be reduced and, consequently, the supply voltage and the power consumption can be lowered.

By making the terminating impedance towards the line dependent on the external impedance network as well as on the voltage and current amplification factors, the impedance will be very well controlled in a silicon implementation in that the impedance network can be built up by means of external components that are very well controlled (around $\pm 1\%$). Also, the amplification factors can be very well controlled on silicon, since they depend only on component matching that can be controlled to within $\pm 1\%$.

Good control of the terminating impedance also makes it possible to reduce the supply voltage in comparison with the known second method above, since no margins have to be added to the output voltage in order to compensate as in cases where the control of the terminating impedance is poor.

Furthermore, any non-resistive impedance can be set by choosing different RLC component combinations in the external impedance network, which improves the impedance matching towards the line, compared to the above second known method

By programming the voltage and current amplification factors, it will be simple to adjust the terminating impedance towards the line without having to replace any discrete components.

Thus, by means of the invention,

- accurate control of the terminating impedance to the line is obtained,
- it will be possible to set non-resistive terminating impedances,
- it will be possible to adjust the terminating impedance in an accurate way without having to change any external components,
- significant reduction of power loss will be obtained in two different ways, namely by avoiding external impedance network in series with the line driver outputs and by controlling the terminating impedance to the line accurately, thus reducing the need for overhead margins in the transmit power, and
- it will be possible to receive signals from and transmit signals to the line in the same loop.

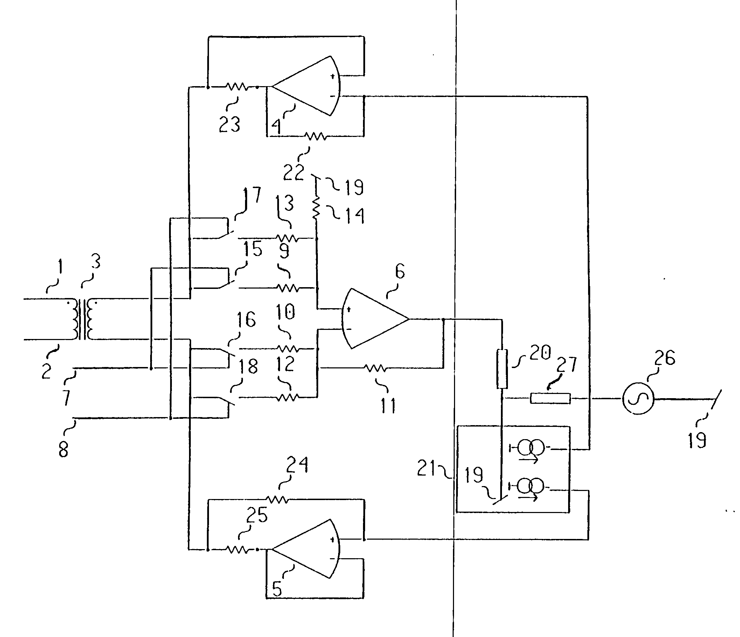

**BRIEF DESCRIPTION OF THE DRAWING**

The invention will be described more in detail below with reference to appended drawing on which the single Figure shows one embodiment of a terminating impedance setting arrangement in accordance with the invention in a line interface circuit.

**PREFERRED EMBODIMENT**

The Figure shows one embodiment of a terminating impedance setting arrangement according to the invention in a line interface circuit which, as to the rest, is not shown in any detail.

AC signals are to be received and transmitted via the line interface circuit which is connected to a tip or A wire 1 and a ring or B wire 2 of a two-wire twisted copper line to a subscriber (not shown) via a transformer 3 having a transformer ratio of n:1.

On the line interface circuit side of the transformer 3, a current amplifier 4 is connected to the tip wire 1, while a current amplifier 5 is connected to the ring wire 2. The current amplifiers 4 and 5 together constitute a line driver.

The AC signals mentioned above are sensed and injected in a manner that will be described further down.

In accordance with the invention, to adapt the terminating impedance of the line interface circuit including the transformer 3 to the characteristic impedance of the line, an amplifier 6, having a settable amplification factor as indicated by two set input terminals 7 and 8, is connectable with its input terminals to the tip and ring wire, respectively, to sense the line voltage on the interface circuit side of the transformer 3.

Supposing that the line voltage is $U_L$, then, the voltage sensed by the amplifier 6. will be equal to $U_L/n$.

If the set input terminal 7 is set high, triggering switches 15 and 16, the gain in the amplifier 6 will be set by the resistors 9 and 10 together with resistors 11 and 14.

If, on the other hand, the set input terminal 8 is set high, triggering the switches 17 and 18, the gain in the amplifier 6 will be set by resistors 13 and 12 together with the resistors 11 and 14

The amplifier 6 is also connected in such a way that it converts an incoming differential signal into a single ended signal referred to a reference voltage 19.

Supposing that the amplification factor in the amplifier 6 is set to $K_1$, the voltage $U_L/n$ will be amplified by the factor $K_1$, i.e. the voltage on the output of the amplifier 6 will be equal to $(K_1 \times U_L)/n$.

In accordance with the invention, the output voltage of the amplifier 6 is converted into a current by means of an impedance network 20, having an impedance Z, which is connected between the output terminal of the amplifier 6 and the input of a current buffer 21. The input of the current buffer 21 is held at said reference voltage 19.

Thus, the current through the impedance network 20 will be $(K_1 \times U_L)/(n \times Z)$.

The current buffer 21 reproduces this current and applies it to the inputs of the current amplifiers 4 and 5.

The current amplification factor of the current amplifier 4 is set by the ratio between resistors 22 and 23, and the current amplification factor of the current amplifier 5 is set by the ratio between resistors 24 and 25.

Supposing that the current amplification factor of the current amplifiers 4 and 5 is set to $G_R$, the output current from these current amplifiers will equal

$$(G_R \times K_1 \times U_L)/(n \times Z).$$

The current applied to the line 1, 2 via the transformer 3, i.e. the line current, will be equal to $(G_R \times K_1 \times U_L)/(n^2 \times Z)$.

Thus, the impedance towards the line 1, 2 via the transformer 3, i.e. the terminating impedance, will be $(n^2 \times Z)/(G_R \times K_1)$.

From the above equation, it is apparent that the terminating impedance can be adjusted by adjusting the amplification factor $K_1$ and/or the amplification factor $G_R$ without changing any external components.

It is also evident that, if the impedance Z of the impedance network 20 is set by using external components that are very accurate, the terminating impedance will be accurately controlled, since it will only depend on ratios ($G_R$ and $K_1$) that are easy to control on silicon with narrow tolerances.

Finally, it is also obvious that any non-resistive terminating impedance can be set to the line by forming the network 20 of combinations of RLC components.

By avoiding impedance networks in series with the outputs of the current amplifiers 4 and 5, and by controlling the terminating impedance accurately, the power loss will be significantly reduced compared to the known solutions.

The described loop can be used for receiving signals from and transmitting signals to the line via the defined terminating impedance $Z_L$.

Received signals can be sensed directly at the line interface circuit side of the transformer 3 and sent to e.g. an analog-to-digital converter (not shown).

Signals to be transmitted are preferably injected by superimposing a signal current at the input of the current buffer 21. A simple way to accomplish this is to connect a signal voltage source 26, referred to the reference voltage 19, via an impedance 27 to the input of the current buffer 21.

## Claims

1. In a line interface circuit for analog broadband applications, a method of setting a terminating impedance towards a two-wire twisted copper line, comprising:

   - sensing the line voltage,
   - amplifying the sensed differential line voltage with a factor $K_1$ into a single ended voltage relative to a reference voltage,
   - converting the amplified voltage into a current through an impedance network connected to a current buffer input connected to said reference voltage,
   - buffering and amplifying the output current from said current buffer by a factor $G_R$, and
   - injecting the amplified current onto the line,

   **characterized in that**
   the impedance network is an external impedance network, and
   **in that** the method further comprises setting the terminating impedance by adjusting the factor $K_1$ and/or the factor $G_R$.

2. The method according to claim 1, further **characterized by** setting the terminating impedance by modifying the impedance of the impedance network.

3. The method according to claim 1 or claim 2, **characterized by** superimposing a signal current onto said current by applying a voltage proportional to a signal voltage relative to said reference voltage over a second impedance network connected to the current buffer input.

4. An arrangement for setting the terminating impedance towards a two-wire twisted copper line (1, 2) in an analog line interface circuit for broadband applications, the analog line interface circuit comprising two current amplifiers (4, 5), each having an amplification factor $G_R$, the outputs of the current amplifiers being connected to the respective wire (1, 2) of a two-wire twisted copper line via a transformer (3) for injecting amplified AC signals onto the respective wire (1, 2) via the transformer (3),
   wherein the arrangement for setting the terminating impedance comprises

   - a voltage amplifier (6) connected to transformer (3) for sensing the line voltage as transformed by the transformer (3), for amplifying the sensed voltage by a factor $K_1$, and for converting the differential input voltage into a single ended output voltage relative to a reference voltage (19),
   - an external voltage-to-current converter impedance network (20), connected between the output of said voltage amplifier (6) and the input of a current buffer (21), for converting said output voltage into a current, the input of the current buffer being connected to said reference voltage (19), the current buffer (21) being adapted to buffer said current to the inputs of the current amplifiers (4, 5), and
   - setting means (7, 8, 9, 10, 11, 12, 13, 14, 15, 16, 17, 18) for adjusting the factor $K_1$ and/or the factor $G_R$ to set the terminating impedance.

5. The arrangement according to claim 4, **characterized in that** a signal voltage source (26) referred to said reference voltage (19) is connected to the input of said current buffer (21) via a second impedance network (27) to superimpose a signal current onto said current to be buffered to the inputs of the current amplifiers (4, 5).

## Patentansprüche

1. In einer Leitungsschnittstellenschaltung für analoge Breitbandanwendungen, ein Verfahren zum Einstellen einer Abschlussimpedanz gegenüber einer zweiadrigen verdrillten Kupferleitung, umfassend:

   - Messen der Leitungsspannung,
   - Verstärken der gemessenen differenziellen Leitungsspannung mit einem Faktor $K_1$ zu einer einpoligen Spannung relativ zu einer Bezugsspannung,
   - Konvertieren der verstärkten Spannung in einen Strom durch ein Impedanznetzwerk, welches mit einem Strompuffereingang verbunden ist, welcher mit der Referenzspannung verbunden ist,
- Puffern und Verstärken des Ausgangsstroms aus dem Strompuffer um einen Faktor $G_R$, und
- Einspeisen des verstärkten Stroms in die Leitung,

**dadurch gekennzeichnet,**
**dass** das Impedanznetzwerk ein externes Impedanznetzwerk ist und dass das Verfahren darüber hinaus ein Einstellen der Abschlussimpedanz durch Anpassen des Faktors $K_1$ und/oder des Faktors $G_R$ umfasst.

2. Verfahren nach Anspruch 1, darüber hinaus **gekennzeichnet durch** Einstellen der Abschlussimpedanz **durch** Modifizieren der Impedanz des Impedanznetzwerks.

3. Verfahren nach Anspruch 1 oder Anspruch 2, **gekennzeichnet durch** Überlagern eines Signalstroms auf den Strom **durch** Anlegen einer Spannung, welche proportional ist zu einer Signalspannung relativ zu der Referenzspannung, über ein zweites Impedanznetzwerk, welches mit dem Strompuffereingang verbunden ist.

4. Anordnung zum Einstellen der Abschlussimpedanz gegenüber einer zweiadrigen verdrillten Kupferleitung (1, 2) in einer analogen Leitungsschnittstellenschaltung für Breitbandanwendungen, wobei die analoge Schnittstellenschaltung zwei Stromverstärker (4, 5) umfasst, welche jeweils einen Verstärkungsfaktor $G_R$ aufweisen, wobei die Ausgänge der Stromverstärker über einen Transformator (3) mit der jeweiligen Ader (1, 2) einer zweiadrigen verdrillten Kupferleitung verbunden sind, um verstärkte Wechselsignale über den Transformator (3) in die jeweilige Ader (1, 2) einzuspeisen,
wobei die Anordnung zum Einstellen der Abschlussimpedanz umfasst:

- einen mit dem Transformator (3) verbundenen Spannungsverstärker (6) zum Messen der von dem Transformator (3) transformierten Leitungsspannung, zum Verstärken der gemessenen Spannung um einen Faktor $K_1$ und zum Konvertieren der differenziellen Eingangsspannung in eine einpolige Ausgangsspannung relativ zu einer Referenzspannung (19),
- ein externes Spannung-Strom-Konverter-Impedanznetzwerk (20), welches zwischen den Ausgang des Spannungsverstärkers (6) und den Eingang eines Strompuffers (21) gekoppelt ist, um die Ausgangsspannung in einen Strom zu konvertieren, wobei der Eingang des Strompuffers mit der Referenzspannung (19) verbunden ist, wobei der Strompuffer (21) dazu ausgestaltet ist, den Strom an die Eingänge der Stromverstärker (4, 5) zu puffern, und
- Einstellmittel (7, 8, 9, 10, 11, 12, 13, 14, 15, 16, 17, 18) zum Einstellen des Faktors $K_1$ und/oder des Faktors $G_R$, um die Abschlussimpedanz einzustellen.

5. Anordnung nach Anspruch 4, **dadurch gekennzeichnet, dass** eine auf die Referenzspannung (19) bezogene Signalspannungsquelle (26) über ein zweites Impedanznetzwerk (27) mit dem Eingang des Strompuffers (21) verbunden ist, um dem an die Eingänge der Stromverstärker (4, 5) zu puffernden Strom einen Signalstrom zu überlagern.

## Revendications

1. Dans un circuit d'interface de ligne pour des applications analogiques à large bande, un procédé de réglage d'une impédance de terminaison en direction d'une ligne de cuivre torsadée à deux fils, dans lequel :

- on détecte la tension de ligne,
- on amplifie la tension différentielle de ligne détectée par un facteur $K_1$ en une tension unique par rapport à une tension de référence,
- on transforme la tension amplifiée en un courant par un réseau d'impédance relié à une entrée de tampon de courant reliée à la tension de référence,
- on tamponne et on amplifie le courant de sortie du tampon de courant par un facteur $G_R$, et
- on injecte le courant amplifié sur la ligne,
**caractérisé en ce que**
- le réseau d'impédance est un réseau d'impédance extérieur et **en ce que** le procédé comprend en outre régler l'impédance de terminaison en ajustant le facteur $K_1$ et/ou le facteur $G_R$.

2. Procédé suivant la revendication 1, **caractérisé en outre par** le réglage de l'impédance de terminaison en modifiant l'impédance du réseau d'impédance.

3. Procédé suivant la revendication 1 ou revendication 2, **caractérisé en ce que** l'on superpose un courant de signal au courant en appliquant une tension proportionnelle à une tension de signal par rapport à une tension de référence sur un deuxième réseau d'impédance connecté à l'entrée du tampon de courant.

4. Agencement de réglage de l'impédance de terminaison en direction d'une ligne (1, 2) de cuivre torsadée à deux fils dans un circuit d'interface de ligne analogique pour des applications à large bande, le circuit d'interface de ligne analogique comprenant deux amplificateurs (4, 5) de courant, ayant chacun un facteur $G_R$ d'amplification, les sorties des amplificateurs de courant étant reliées au fil (1, 2) respectif d'une ligne de cuivre torsadée à deux fils par l'intermédiaire d'un transformateur (3) pour injecter des signaux en courant alternatif amplifiés sur le fil (1, 2) respectif par l'intermédiaire du transformateur (3), dans lequel l'agencement de réglage de l'impédance de terminaison comprend

- un amplificateur (6) de tension relié au transformateur (3) pour détecter la tension de la ligne telle que transformée par le transformateur (3) pour amplifier la tension détectée par un facteur $K_1$ et pour transformer la tension d'entrée différentielle en une tension de sortie unique par rapport à une tension (19) de référence,
- un réseau (20) d'impédance extérieur de convertisseur tension à courant, monté entre la sortie de l'amplificateur (6) de tension et l'entrée d'un tampon (21) de courant, pour transformer la tension de sortie en un courant, la tension (19) de référence étant appliquée au tampon de courant, le tampon (21) de courant étant conçu pour tamponner le courant allant aux entrées des amplificateurs (4, 5) de courant, et
- des moyens (7, 8, 9, 10, 11, 12, 13, 14, 15, 16, 17, 18) de réglage pour ajuster le facteur $K_1$ et/ou le facteur $G_R$ afin de régler l'impédance de terminaison.

5. Agencement suivant la revendication 4, **caractérisé en ce qu'**une source (26) de tension de signal, rapportée à la tension (19) de référence, est reliée à l'entrée du tampon (21) par l'intermédiaire d'un deuxième réseau (27) d'impédance pour superposer un courant de signal au courant à tamponner allant aux entrées des amplificateurs (4, 5) de courant.

**EP 1 068 675 B1**

**REFERENCES CITED IN THE DESCRIPTION**

**Patent documents cited in the description**

- US 5510751 A

- US 4402485 A